Europäisches Patentamt

European Patent Office

Office européen des brevets

(19)

(11) Veröffentlichungsnummer : **0 212 205**
**B1**

(12)   EUROPÄISCHE PATENTSCHRIFT

(45) Veröffentlichungstag der Patentschrift :
21.12.88

(51) Int. Cl.⁴ : **B 23 B 31/16**

(21) Anmeldenummer : **86109372.2**

(22) Anmeldetag : **09.07.86**

(54) Aufsatzbacke für Spannfutter.

(30) Priorität : **13.08.85 DE 3528943**

(43) Veröffentlichungstag der Anmeldung :
**04.03.87 Patentblatt 87/10**

(45) Bekanntmachung des Hinweises auf die Patenterteilung : **21.12.88 Patentblatt 88/51**

(84) Benannte Vertragsstaaten :
**DE FR GB IT SE**

(56) Entgegenhaltungen :
**EP—A— 0 053 433**
**DE—B— 1 281 781**
**DE—B— 1 287 902**
**US—A— 4 546 988**

(73) Patentinhaber : **Paul Forkardt GmbH & Co. KG**
**Rosenstrasse 44-46**
**D-4000 Düsseldorf 30 (DE)**

(72) Erfinder : **Beckers, Heinz**
**Zeppelinstrasse 60**
**D-4060 Viersen 11 (DE)**
Erfinder : **Steinberger, Josef**
**Sebastiansweg 30**
**D-4000 Düsseldorf (DE)**

(74) Vertreter : **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11 (DE)**

## Beschreibung

Die Erfindung betrifft eine Aufsatzbacke für Spannfutter, deren Grundbacken mit einer in Backenlängsrichtung verlaufenden, im Querschnitt T-förmigen Nut und auf der Stirnfläche mit beidseits der in der Stirnfläche mündenden Nut ausgebildeten Verzahnungen, vorzugsweise Spitzverzahnungen, versehen sind, in die an der Rückseite der Aufsatzbacke ausgebildete Gegenverzahnungen der Aufsatzbacke eingreifen, die mittels mindestens eines in die T-förmige Nut eingreifenden Halteelements entsprechend der Zahnteilung in Backenlängsrichtung relativ zur Grundbacke stufenweise versetzbar sowie auswechselbar an der Grundbacke festlegbar ist.

Aufsatzbacken der voranstehend beschriebenen Art sind aus der EP-A-0 053 433 bekannt. Sie sind mittels zweier Backenbefestigungsschrauben an der jeweiligen Grundbacke in radialer Richtung versetzbar und auswechselbar befestigt. Zu diesem Zweck greifen die die Aufsatzbacke in axialer Richtung des Spannfutters durchragenden und mit ihrem Kopf innerhalb der Aufsatzbacke liegenden Befestigungsschrauben in Nutensteine ein, die in der T-förmigen Nut der Grundbacke angeordnet sind und nach Lösen der Befestigungsschrauben sowohl einen Versatz als auch ein vollständiges Auswechseln der Aufsatzbacke ermöglichen. Zum Festlegen der Aufsatzbacke in der jeweils gewünschten Stellung müssen die Backenbefestigungsschrauben angezogen werden, so daß über die Nutensteine die vorzugsweise als Spitzverzahnungen ausgebildeten Verzahnungen einerseits an der Aufsatzbacke und andererseits an der Grundbacke ineinandergreifen und neben der Lagesicherung der Aufsatzbacke auch eine Übertragung der Spannkräfte bewirken.

Der Nachteil dieser bekannten Aufsatzbacken ist darin zu sehen, daß für die beiden Backenbefestigungsschrauben Durchgangsbohrungen in der Aufsatzbacke vorgesehen werden müssen, die nicht nur die Gestaltung der Aufsatzbacke zur Bildung von Spannstufen behindern, sondern auch ein Zerspanen der Aufsatzbacke zur Anpassung an unterschiedliche Werkstücke verhindern und die Verwendung von auswechselbaren Spanneinsätzen ausschließen. Derartige auswechselbare Spanneinsätze können deshalb bisher nur an einsteiligen Spannbacken realisiert werden.

Der Erfindung liegt die Aufgabe zugrunde, die Aufsatzbacke der eingangs beschriebenen Art derart weiterzubilden, daß ihre Festlegung an der Grundbacke nach einem Auswechseln oder radialen Verstellen mittels mindestens einer Schraube möglich ist, welche außerhalb des eigentlichen Backenkörpers angeordnet ist, so daß der Backenkörper mit beliebigen Spannstufen versehen bzw. zur Herstellung von Spannflächen vollständig zerspant bzw. mit auswechselbaren Spanneinsätzen versehen werden kann.

Die Lösung dieser Aufgabenstellung durch die Erfindung ist dadurch gekennzeichnet, daß das in die T-förmige Nut eingreifende Halteelement starr an der Aufsatzbacke angeordnet ist und daß die Gegenverzahnungen jeweils an einer Klemmleiste ausgebildet sind, die durch mindestens eine Schraube in Backenquerrichtung verstellbar und hierbei über eine zwischen Klemmleiste und Aufsatzbacke ausgebildete Keilfläche in Richtung auf die Grundbacke zustellbar ist.

Bei der erfindungsgemäß ausgebildeten Aufsatzbacke entfallen die bisher erforderlichen Backenbefestigungsschrauben, welche die Aufsatzbacke in axialer Richtung durchdringen ; die Festlegung der Aufsatzbacke an der unveränderten Grundbacke erfolgt stattdessen durch Anziehen mindestens einer Schraube, die im hinteren Teil der Aufsatzbacke in deren Querrichtung angeordnet ist und mindestens eine der beiden Klemmleisten betätigt. Diese Klemmleisten tragen die mit den auf der Stirnfläche der Grundbacke ausgebildeten Verzahnungen zusammenwirkenden Gegenverzahnungen, die bei einem Anziehen der Schraube über die zwischen Aufsatzbacke und Klemmleiste ausgebildete Keilfläche in axialer Richtung derart zugestellt werden, daß diese Gegenverzahnung bei in der jeweils gewünschten Stellung befindlicher Aufsatzbacke in die Verzahnung der Grundbacke eingreift. Das starr an der Aufsatzbacke angeordnete Halteelement, dessen Querschnitt dem der T-förmigen Nut in der Grundbacke angepaßt ist, greift hierbei in diese Nut der Grundbacke ein, so daß die axiale Stellung der Aufsatzbacke in jedem Fall gesichert ist und lediglich die radiale Stellung, d. h. die relative Lage der Aufsatzbacke zur Grundbacke, durch Betätigen der Klemmleisten festgelegt werden muß.

Da der eigentliche, dem Einspannen eines Werkstückes dienende Körper der Aufsatzbacke nicht mit Bohrungen für Backenbefestigungsschrauben versehen ist, kann er in beliebiger Weise entweder mit Spannstufen versehen oder zur Anpassung an unterschiedliche Werkstücke zerspannt werden ; außerdem ist es möglich, an diesem Aufsatzbackenkörper auswechselbare Spanneinsätze anzuordnen, da deren Halterung und Befestigung nicht durch Backenbefestigungsschrauben behindert wird. Die erfindungsgemäße Aufsatzbacke kann somit beliebig ausgebildet und unter Verwendung vorhandener Grundbacken eingesetzt werden, wobei der genaue tangentiale Sitz der Aufsatzbacke an der Grundbacke für eine hohe Rundlaufgenauigkeit sorgt.

Gemäß weiteren Merkmalen der Erfindung kann das im Querschnitt T-förmige Halteelement entweder an der Rückseite der Aufsatzbacke starr befestigt oder einstückig an die Rückseite der Aufsatzbacke angeformt werden. Hierdurch ergibt sich eine hohe Kräfte übertragende und dennoch einfach herzustellende Ausführung. Die zwischen Aufsatzbacke und Klemmleisten ausgebildeten Keilflächen werden erfindungsgemäß in Backenlängsrichtung ausgebildet.

Um bei einem Wechsel der Aufsatzbacke ein schnelles Ausheben der an den Klemmleisten ausgebildeten Gegenverzahnungen aus den Verzahnungen der Grundbacke zu erzielen, sind die Klemmleisten erfindungsgemäß durch mindestens eine in Spreizrichtung wirkende Feder belastet. Ein exakter Sitz der Aufsatzbacke auf der Grundbacke wird weiterhin dadurch gewährleistet, daß gemäß einem weiteren Merkmal der Erfindung jede Klemmleiste in axialer Richtung zwangsgeführt ist. Bei einer bevorzugten Ausführungsform ist zu diesem Zweck jede Klemmleiste durch einen in eine Quernut der Klemmleiste eingreifenden, mit Abflachungen versehenen Führungsbolzen geführt.

Die Handhabung der erfindungsgemäßen Aufsatzbacke kann weiterhin dadurch verbessert werden, daß die Bewegungen der beiden Klemmleisten synchronisiert sind. Bei einer bevorzugten Ausführungsform der Erfindung liegen zu diesem Zweck die beiden Führungsbolzen mit ihrer Stirnfläche im Grund der Quernut an, sind in Backenquerrichtung verschiebbar in der Aufsatzbacke gelagert und durch eine gemeinsame Spreizfeder belastet. Eine besonders einfache Ausbildung ergibt sich, wenn die beiden Führungsbolzen an ihrer einander zugewandten Stirnfläche mit einer Keilschräge versehen sind, an der eine entsprechende Schräge eines federbelasteten Spreizstiftes anliegt. Dieser Spreizstift wird vorzugsweise in einer axialen Bohrung der Aufsatzbacke verschiebbar geführt.

Mit der Erfindung wird eine Aufsatzbacke geschaffen, die nicht nur bei neuen, sondern auch bei vorhandenen Spanfuttern mit Grundbacken verwendet werden kann, die eine in Backenlängsrichtung verlaufende, im Querschnitt T-förmige Nut und auf der Stirnfläche beiderseits der in der Stirnfläche mündenden Nut ausgebildete Verzahnungen aufweisen. Trotz der nahezu unbeschränkten Gestaltungsmöglichkeit der erfindungsgemäßen Aufsatzbacke kann diese preiswert hergestellt werden und ergibt zugleich einen verbesserten Sitz der Aufsatzbacke auf der Grundbacke, wodurch sich die Rundlaufgenauigkeit des Spannfutters erhöht.

Auf der Zeichnung sind zwei Ausführungsbeispiele der erfindungsgemäßen Aufsatzbacke im Zusammenwirken mit einer bekannten Grundbacke eines im übrigen nicht gezeichneten Spannfutters dargestellt, und zwar zeigen :

Fig. 1 eine Seitenansicht einer ersten Ausführungsform,

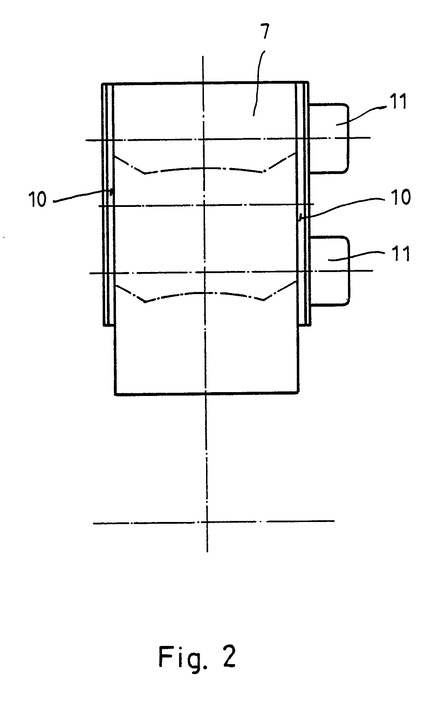

Fig. 2 eine Stirnansicht der Aufsatzbacke gemäß Fig. 1,

Fig. 3 einen Querschnitt gemäß der Schnittlinie III-III in Fig. 1 im Bereich einer Schraube,

Fig. 4 einen weiteren Querschnitt gemäß der Schnittlinie IV-IV in Fig. 1 im Bereich der Führungsbolzen,

Fig. 5 einen Querschnitt durch die Aufsatzbacke gemäß der Schnittlinie V-V in Fig. 1 im Bereich der auf die Klemmleisten wirkenden Federn und

Fig. 6 einen der Fig. 4 entsprechenden Querschnitt durch eine zweite Ausführungsform der Aufsatzbacke mit einer abgeänderten Federbelastung für die Klemmleisten.

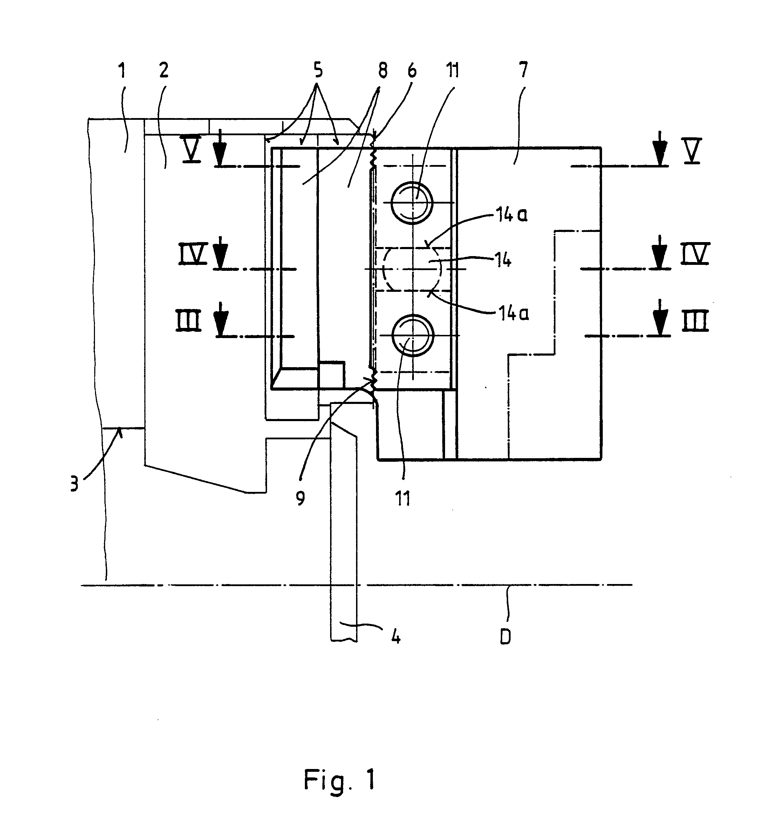

In der Seitenansicht gemäß Fig. 1 ist mit dünnen Linien der Teil eines Futterkörpers 1 eines Spannfutters gezeichnet, in dessen radialen Führungen mindestens zwei Grundbacken 2 verstellbar sind, von denen eine in Fig. 1 ebenfalls mit dünnen Linien eingezeichnet ist. Die radiale Verstellung dieser Grundbacken 2 im Futterkörper 1 erfolgt über ein beliebiges Getriebe, welches die axiale Bewegung eines Verstellgliedes, vorzugsweise eines Futterkolbens, in eine radiale Verstellbewegung der Grundbacken 2 umsetzt. In Fig. 1 ist eine zentrale Bohrung 3 im Futterkörper 1 für die Aufnahme eines zentralen Verstellgliedes zu erkennen. Diese Bohrung 3 ist frontseitig durch einen Deckel 4 verschlossen.

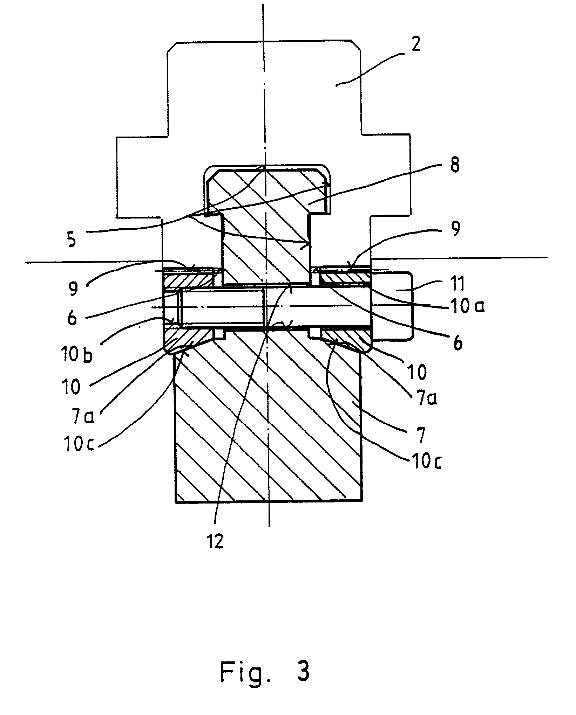

Wie die Schnittdarstellungen in den Figuren 3 bis 5 erkennen lassen, ist in der Grundbacke 2 eine in Backenlängsrichtung verlaufende und im Querschnitt T-förmige Nut 5 ausgebildet, die in der Stirnfläche der Grundbacke 2 mündet. Diese Stirnfläche ist zu beiden Seiten der Nut 5 mit einer Verzahnung 6 versehen, die vorzugsweise als Spitzverzahnung ausgeführt wird. In diese Verzahnungen 6 greifen entsprechende Gegenverzahnungen ein, die an der Rückseite der Aufsatzbacke 7 ausgebildet sind, so daß die Aufsatzbacke 7 nicht nur auswechselbar an der Grundbacke 2 befestigt werden kann, sondern auch entsprechend der Zahnteilung der Verzahnungen 6 in Backenlängsrichtung relativ zur Grundbacke 2 stufenweise versetzbar ist.

Die in den Zeichnungen mit dickeren Linien dargestellte Aufsatzbacke 7 umfaßt ein Halteelement 8, das in die T-förmige Nut 5 der Grundbacke 2 eingreift und dementsprechend im Querschnitt T-förmig ausgeführt ist, wie insbesondere die Querschnitte gemäß den Figuren 3 bis 5 erkennen lassen. Dieses Halteelement 8 kann starr an der Aufsatzbacke 8 angeordnet werden ; beim Ausführungsbeispiel ist es einstückig mit der Aufsatzbacke 7 ausgeführt. Über das Halteelement 8 erfolgt somit eine Führung der Aufsatzbacke 7 sowohl in Backenlängsrichtung als auch quer hierzu, d.h. bezüglich der Drehachse D des Spannfutters gesehen in radialer und tangentialer Richtung.

Die mit den Verzahnungen 6 der Grundbacke 2 zusammenwirkenden Gegenverzahnungen 9 sind an Klemmleisten 10 ausgebildet, die an der Rückseite der Aufsatzbacke 7 beidseitig des Halteelementes 8 angeordnet sind und beim Ausführungsbeispiel durch zwei Schrauben 11 gehalten sind. Diese Schrauben 11 durchgreifen jeweils eine Querbohrung 12 in der Aufsatzbacke 7. Beim Ausführungsbeispiel sind die Schrauben 11 als Inbusschrauben ausgeführt, deren Kopf an der Außenseite der einen Klemmleiste 10 anliegt und deren Schaft eine in dieser Klemmleiste 10 ausgebildete zylindrische Bohrung 10a durchgreift, wogegen er mit seinem Gewinde in eine Gewindebohrung 10b in der anderen Klemmleiste 10 eingreift. Jede Schraube 11 hält somit beide Klemmleisten 10 an der Aufsatzbacke 7.

Im Bereich der Klemmleisten 10 ist die Aufsatzbacke 7 mit einer Keilfläche 7a versehen, an der eine entsprechende Keilfläche 10c der jeweiligen Klemmleiste 10 anliegt. Diese Keilflächen 7a bzw. 10c verlaufen in Backenlängsrichtung und bewirken bei einem Anziehen der Schrauben 11 eine Zustellung der Klemmleisten 10 in Richtung auf die Grundbacke 2.

Bei gelockerten Schrauben 11 befinden sich die Klemmleisten 10 demgemäß in einer Stellung, in der die Gegenverzahnungen 9 außer Eingriff mit den Verzahnungen 6 der Grundbacke 2 sind. Die Aufsatzbacke 7 kann demgemäß in Backenlängsrichtung relativ zur Grundbacke 2 unter Führung durch das Halteelement 8 verschoben werden, um entweder einen Wechsel der Aufsatzbacke 7 oder eine Verstellung der Aufsatzbacke 7 relativ zur Grundbacke 2 vorzunehmen. Sobald die Aufsatzbacke 7 die gewünschte Stellung relativ zur Grundbacke 2 eingenommen hat, werden die beiden Schrauben 11 angezogen. Hierdurch erfolgt eine gegeneinander gerichtete Bewegung der Klemmleisten 10, die hierbei über die Keilflächen 7a und 10c eine Zustellbewegung in Richtung der Grundbacke 2 ausführen. Somit gelangen die Gegenverzahnungen 9 in Eingriff mit den Verzahnungen 6 an der Grundbacke 2. Der Eingriff der beiden Verzahnungen 6 und 9 sichert hierbei nicht nur die Lage der Aufsatzbacke 7 auf der Grundbacke 2, sondern ermöglicht auch eine Kraftübertragung zwischen Aufsatzbacke 7 und Grundbacke 2 bei einem anschließenden Einspannen eines Werkstückes und Aufbringen von Bearbeitungskräften.

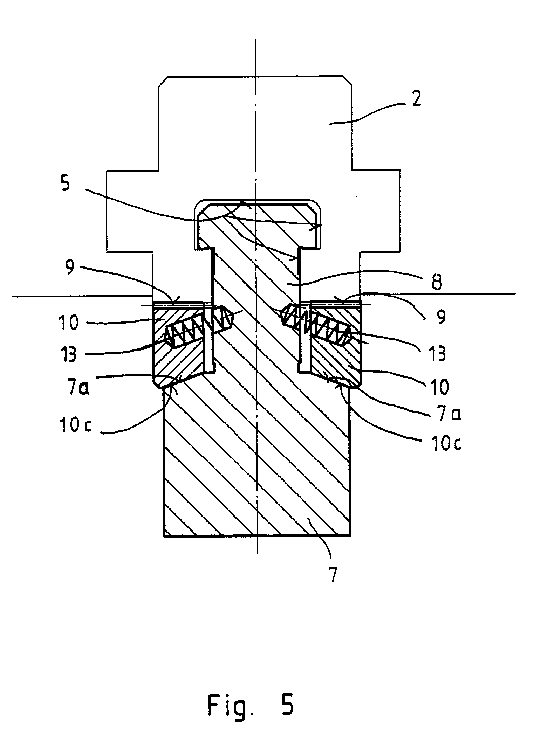

Um bei einem Lösen der Schrauben 11 ein Spreizen der beiden Klemmleisten 10 zu unterstützen und damit ein Aufheben des Zahneingriffes zwischen Gegenverzahnungen 9 und Verzahnungen 6 zu erzielen, ist jede Klemmleiste 10 durch mindestens eine Feder 13 belastet. Beim ersten Ausführungsbeispiel gemäß Fig. 5 sind diese Federn 13 in Anbohrungen sowohl der Aufsatzbacke 7 als auch der Klemmleisten 10 angeordnet, die in Richtung der Keilflächen 7a bzw. 10c verlaufen. Bei einem Lösen der Schrauben 11 erfolgt somit aufgrund der Federn 13 eine Spreizbewegung der Klemmleisten 10, wodurch deren Gegenverzahnung 9 außer Eingriff mit den Verzahnungen 6 an der Grundbacke 2 gelangt.

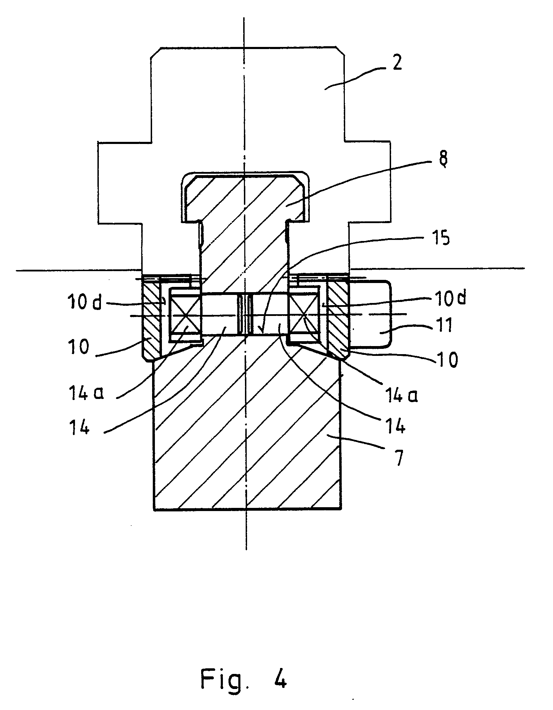

Die Fig. 4 zeigt weiterhin, daß jede Klemmleiste 10 in axialer Richtung des Spannfutters, d.h. quer zur Backenlängsrichtung zwangsgeführt ist. Beim dargestellten Ausführungsbeispiel sind die Klemmleisten 10 zu diesem Zweck jeweils mit einer Quernut 10d versehen, in die ein mit Abflachungen 14a versehener Führungsbolzen 14 eingreift, der in einer weiteren Querbohrung 15 der Aufsatzbacke 7 angeordnet ist. Beim Ausführungsbeispiel nach Fig. 4 werden zwei Führungsbolzen 14 verwendet, die seitlich in die Querbohrung 15 eingesetzt sind und einen verdickten Kopf haben, der mit den Abflachungen 14a versehen ist. Diese Führungsbolzen 14 sorgen somit dafür, daß sich die Klemmleisten 10 beim Anziehen und Lösen nicht in Backenlängsrichtung verschieben können.

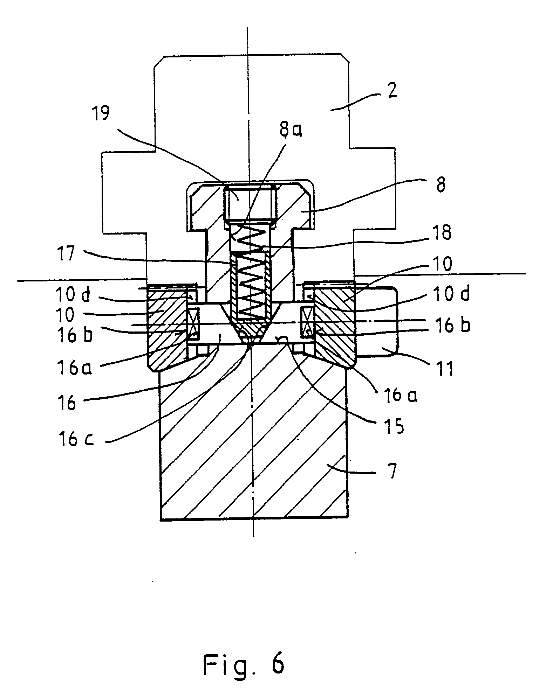

Beim zweiten Ausführungsbeispiel nach Fig. 6 ist die Zwangsführung der Klemmleisten 10 mit der Federbelastung der Klemmleisten 10 kombiniert, um eine Synchronisation der gegenläufigen Bewegungen der beiden Klemmleisten 10 beim Anziehen oder Lösen der Schrauben 11 zu erreichen. Zu diesem Zweck werden Führungsbolzen 16 verwendet, die mit ihrer im Anschluß an die Abflachungen 16a verlaufenden Stirnfläche 16b im Grund der jeweiligen Quernut 10d der Klemmleiste 10 anliegen und verschiebbar in der Querbohrung 15 der Aufsatzbacke 7 geführt sind. Die beiden Führungsbolzen 16 sind an ihrer einander zugewandten Stirnfläche jeweils mit einer Keilschräge 16c versehen. An diesen Keilschrägen 16c liegt eine entsprechende Schräge eines Spreizstiftes 17 an, der durch eine Feder 18 belastet ist. Beim Ausführungsbeispiel liegt dieser Spreizstift 17 in einer mittigen Bohrung 8a im Halteelement 8 der Aufsatzbacke 7. Die Feder 18 stützt sich mit einem Ende in einer Bohrung des Spreizstiftes 17 und mit dem anderen Ende an einer Madenschraube 19 ab, die die Bohrung 8a im Halteelement 8 der Aufsatzbacke 7 verschließt.

Wie die Fig. 6 erkennen läßt, wird auf diese Weise erreicht, daß die die Führung der Klemmleisten 10 quer zu ihrer Längserstreckung übernehmenden Führungsbolzen 16 zugleich eine Synchronisation der gegeneinander gerichteten Bewegungen der Klemmleisten 10 bewirken, weil beide mit ihren Stirnflächen 16b auf die Klemmleisten 10 wirkenden Führungsbolzen 16 ständig durch den Spreizstift 17 belastet sind, der unter der Kraft der Feder 18 steht. Beim Lösen der Schrauben 11 erfolgt somit ein gleichmäßiges Spreizen der Klemmleisten 10. Ein Anziehen der Schrauben 11 bewirkt eine synchrone Zustellbewegung der mit den Gegenverzahnungen 9 versehenen Klemmleisten 10 in Richtung auf die Verzahnungen 6 der Grundbacke 2.

Die Aufsatzbacke 7 ist auf den Zeichnungen mit einem blockartigen Backenkörper dargestellt. In allen Zeichnungen ist zu erkennen, daß dieser blockartige Backenkörper frei von Klemmelementen oder Halteschrauben ist, so daß er bis zu den Klemmleisten 10 zerspant werden kann, wenn die Spannflächen der Aufsatzbacke 7 zwecks Anpassung an das jeweilig einzuspannende Werkstück durch eine spanabhebende Bearbeitung hergestellt werden. Mit strichpunktierten Linien ist in Fig. 1 ein stufenförmiger Verlauf derartiger Einspannflächen angedeutet. Außer einer problemlosen Herstellung der jeweils gewünschten Spannflächen kann die Aufsatzbacke 7 auch mit auswechselbaren Spanneinsätzen versehen werden, da das gesamte Volumen des blockförmigen Backenkörpers für eine Lagerung und Befestigung derartiger Spanneinsätze zur Verfügung steht.

Bezugsziffernliste

1 Futterkörper
2 Grundbacke 3 Bohrung
4 Deckel
5 Nut
6 Verzahnung
7 Aufsatzbacke
7a Keilfläche
8 Halteelement
8a Bohrung
9 Gegenverzahnung
10 Klemmleiste
10a Bohrung
10b Gewindebohrung
10c Keilfläche
10d Quernut
11 Schraube
12 Querbohrung
13 Feder
14 Führungsbolzen
14a Abflachung
15 Querbohrung
16 Führungsbolzen
16a Abflachung
16b Stirnfläche
16c Keilschräge
17 Spreizstift
18 Feder
19 Madenschraube
D Drehachse

## Patentansprüche

1. Aufsatzbacke für Spannfutter, deren Grundbacken (2) mit einer in Backenlängsrichtung verlaufenden, im Querschnitt T-förmigen Nut (5) und auf der Stirnfläche mit beidseits der in der Stirnfläche mündenden Nut (5) ausgebildeten Verzahnungen (6), vorzugsweise Spitzverzahnungen, versehen sind, in die an der Rückseite der Aufsatzbacke (7) ausgebildete Gegenverzahnungen (9) der Aufsatzbacke (7) eingreifen, die mittels mindestens eines in die T-förmige Nut (5) eingreifenden Halteelements (8) entsprechend der Zahnteilung in Backenlängsrichtung relativ zur Grundbacke (2) stufenweise versetzbar sowie auswechselbar an der Grundbacke (2) festlegbar ist, dadurch gekennzeichnet, daß das in die T-förmige Nut (5) eingreifende Halteelement (8) starr an der Aufsatzbacke (7) angeordnet ist und daß die Gegenverzahnungen (9) jeweils an einer Klemmleiste (10) ausgebildet sind, die durch mindestens eine Schraube (11) in Backenquerrichtung verstellbar und hierbei über eine zwischen Klemmleiste (10) und Aufsatzbacke (7) ausgebildete Keilfläche (7a, 10c) in Richtung auf die Grundbacke (2) zustellbar ist.

2. Aufsatzbacke nach Anspruch 1, dadurch gekennzeichnet, daß das im Querschnitt T-förmige Halteelement (8) an der Rückseite der Aufsatzbacke (7) befestigt ist.

3. Aufsatzbacke nach Anspruch 1, dadurch gekennzeichnet, daß das im Querschnitt T-förmige Halteelement (8) einstückig an die Rückseite der Aufsatzbacke (7) angeformt ist.

4. Aufsatzbacke nach mindestens einem der Ansprüche 1 bis 3, dadurch gekennzeichnet, daß die Keilflächen (7a, 10c) in Backenlängsrichtung ausgebildet sind.

5. Aufsatzbacke nach mindestens einem der Ansprüche 1 bis 4, dadurch gekennzeichnet, daß die Klemmleisten (10) durch mindestens eine in Spreizrichtung wirkende Feder (13, 18) belastet sind.

6. Aufsatzbacke nach mindestens einem der Ansprüche 1 bis 5, dadurch gekennzeichnet, daß jede Klemmleiste (10) in axialer Richtung des Spannfutters zwangsgeführt ist.

7. Aufsatzbacke nach Anspruch 6, dadurch gekennzeichnet, daß jede Klemmleiste (10) durch einen in eine Quernut (10d) der Klemmleiste (10) eingreifenden, mit Abflachungen (14a, 16a) versehenen Führungsbolzen (14, 16) geführt ist.

8. Aufsatzbacke nach mindestens einem der Ansprüche 1 bis 7, dadurch gekennzeichnet, daß die Bewegungen der beiden Klemmleisten (10) synchronisiert sind.

9. Aufsatzbacke nach den Ansprüchen 7 und 8, dadurch gekennzeichnet, daß die beiden Führungsbolzen (16) mit ihrer Stirnfläche (16b) im Grund der Quernut (10d) anliegen, in Backenquerrichtung verschiebbar in der Aufsatzbacke (7) gelagert und durch eine gemeinsame Feder (18) belastet sind.

10. Aufsatzbacke nach Anspruch 9, dadurch gekennzeichnet, daß die beiden Führungsbolzen (16) an ihrer einander zugewandten Stirnfläche mit einer Keilschräge (16c) versehen sind, an der eine entsprechende Schräge eines federbelasteten Spreizstiftes (17) anliegt.

11. Aufsatzbacke nach Anspruch 10, dadurch gekennzeichnet, daß der Spreizstift (17) in einer axialen Bohrung (8a) der Aufsatzbacke (7) verschiebbar geführt ist.

12. Aufsatzbacke nach den Ansprüchen 9 bis 11, dadurch gekennzeichnet, daß die Feder (18) in der Bohrung (8a) angeordnet ist, die durch eine Madenschraube (19) verschlossen ist.

## Claims

1. A top jaw for a chuck whose base jaws (2) are formed with a T-shaped cross-section groove (5) extending lengthwise of the jaws, the base jaws (2) being formed on their end face with toothings (6), preferably pointed toothings, on either side of the groove (5), the same extending into the end face, the toothings being engaged by companion toothings (9) of the top jaw (7), the companion toothings being devised on the back of the top jaw (7), the same being so securable on the base jaw (2), by means of a retaining element (8) engaging in the slot (5), as to be movable in steps relatively to the base jaw (2) lengthwise thereof in accordance with the tooth pitch and as to be interchangeable, characterised in that the retaining element (8) which engages in the T-shaped groove (5) is rigidly disposed on the top jaw (7) and the companion toothings (9) are each devised on a clamping strip or ledge or the like (10) which is adapted to be adjusted transversely of the jaw by at least one screw (11) and simultaneously to be infed towards the base jaw (2) by way of a wedge surface (7a, 10c) devised between the clamping strip or ledge (10) and the top jaw (7).

2. A top jaw according to claim 1, characterised in that the T-section retaining element (8) is secured to the back of the top jaw (7).

3. A top jaw according to claim 1, characterised in that the retaining element (8) is devised unitarily on the back of the top jaw (7).

4. A top jaw according to at least one of claims 1-3, characterised in that the wedge surfaces (7a, 10c) extend lengthwise of the jaw.

5. A top jaw according to at least one of claims 1-4, characterised in that the clamping strips or ledges (10) are biased by at least one spring (13, 18) operative in the expanding direction.

6. A top jaw according to at least one of claims 1-5, characterised in that each clamping ledge or strip (10) is guided positively axially of the chuck.

7. A top jaw according to claim 6, characterised in that each clamping strip or ledge (10) is guided by a guide pin (14, 16) which engages in a cross-groove (10d) in the strip or ledge (10) and which has facets (14a, 16a).

8. A top jaw according to at least one of claims 1-7, characterised in that the movements of the two strips or ledges (10) are synchronized.

9. A top jaw according to claims 7 and 8, characterised in that the two guide pins engage by way of their end face (16b) in the base of the cross-groove (10d), are so mounted in the top jaw (7) as to be movable transversely thereof and are biased by a common spring (18).

10. A top jaw according to claim 9, characterised in that the two guide pins (16) have a wedge-shaped inclination (16c) on their end faces near one another and a corresponding inclination of a spring-biased expanding pin (17) engages such wedge-shaped inclination (16c).

11. A top jaw according to claim 10, characterised in that the expanding pin (17) is movingly guided in an axial bore (8a) in the top jaw (7).

12. A top jaw according to claims 9-11, characterised in that the spring (18) is disposed in the bore (8a) and the same is closed by a grub screw (19).

**Revendications**

1. Mâchoire échangeable pour mandrin de serrage dont les mâchoires de base (2) sont pourvues d'une rainure (5) à section en forme de T s'étendant suivant la direction longitudinale des mâchoires et des dentures (6), de préférence des dentures pointues constituées sur la face frontale des deux côtés de la rainure (5) débouchant sur la face frontale, sur lesquelles s'engrènent les contre-dentures (9) de la mâchoire échangeable (7) constituées sur la face arrière de la mâchoire échangeable (7), qui peut être fixée sur la mâchoire de base (2) avec possibilité de déplacement graduel par rapport à la mâchoire de base (2) suivant la direction longitudinale de la mâchoire du pas des dents, ainsi qu'être remplacée au moyen d'au moins un élément de maintien (8) engagé dans la rainure (5) en forme de T, caractérisé en ce que l'élément de maintien (8) engagé dans la rainure (5) en forme de T est disposé de manière rigide sur la mâchoire échangeable (7) et en ce que les contre-dentures (9) respectivement constituées sur une rive de serrage (10) peuvent être déplacées au moyen d'au moins d'une vis (11) suivant la direction transversale de la mâchoire et être approchées en direction de la mâchoire de base (2) au moyen d'une surface en coin (7a, 10c) constituée entre la rive de serrage (10) et la mâchoire échangeable (7).

2. Mâchoire échangeable selon la revendication 1, caractérisé en ce que l'élément de maintien (8) à section en forme de T est fixé sur la face arrière de la mâchoire échangeable (7).

3. Mâchoire échangeable selon la revendication 1, caractérisée en ce que l'élément de maintien (8) à section en forme de T est formé d'une seule pièce avec la face arrière de la monture échangeable (7).

4. Mâchoire échangeable selon l'une au moins des revendications 1 à 3, caractérisée en ce que les surfaces en coin (7a, 10c) sont constituées suivant la direction longitudinale de la mâchoire.

5. Mâchoire échangeable selon l'une au moins des revendications 1 à 4, caractérisée en ce que les rives de serrage (10) sont chargées par au moins un ressort (13, 18) exerçant son action dans la direction d'écartement.

6. Mâchoire échangeable selon l'une au moins des revendications 1 à 5, caractérisée en ce que chaque rive de serrage (10) est guidée à force suivant la direction axiale du mandrin de serrage.

7. Mâchoire échangeable selon la revendication 6, caractérisée en ce que chaque rive de serrage (10) est guidée au moyen de broches-guides (14, 16) pourvues d'aplatissements (14a, 16a) qui sont en prise avec une rainure transversale (10d) de la rive de serrage (10).

8. Machine échangeable selon l'une au moins des revendications 1 à 7, caractérisée en ce que les déplacements des deux rives de serrage (10) sont synchronisés.

9. Mâchoire échangeable selon les revendications 7 et 8, caractérisée en ce que les deux broches-guides (16) s'appuient par leur face frontale (16b) sur le fond de la rainure transversale (10d), sont montées déplaçables sur la mâchoire échangeable (7) suivant la direction transversale de la mâchoire et sont chargées par un ressort commun (18).

10. Mâchoire échangeable selon la revendication 9, caractérisée en ce que les deux broches-guides (16) sont pourvues sur leurs faces frontales en regard d'une surface oblique en coin (16c) sur laquelle s'appuie un profil oblique correspondant d'une tige d'écartement (17) chargée par ressort.

11. Mâchoire échangeable selon la revendication 10, caractérisée en ce que la tige d'écartement (17) est guidée avec possibilité de déplacement dans un perçage axial (8a) de la mâchoire échangeable (7).

12. Mâchoire échangeable selon les revendications 9 à 11, caractérisé en ce que le ressort (18) est disposé dans le perçage (8a) qui est fermé par une vis-pointeau (19).

Fig. 1

Fig. 2

Fig. 3

Fig. 4

Fig. 5

Fig. 6